# EUROPÄISCHE PATENTSCHRIFT

(11) **EP 3 889 403 B1**
(45) Veröffentlichungstag und Bekanntmachung des Hinweises auf die Patenterteilung: **18.01.2023**
(21) Anmeldenummer: 21159864.4
(22) Anmeldetag: 01.03.2021
(51) Int. Cl.: F01N 3/021, F01N 3/10, F01N 3/20, F01N 13/00, F01N 3/28

(54) **MISCHBAUGRUPPE**
MIXING ASSEMBLY
MODULE DE MÉLANGE

(30) Priorität: 01.04.2020 DE 102020109022
(43) Veröffentlichungstag der Anmeldung: 06.10.2021
(73) Patentinhaber: Purem GmbH, 66539 Neunkirchen (DE)
(72) Erfinder: Mayer, Michael, 72658 Bempflingen (DE); Többen, Heike, 73066 Uhingen (DE); Illi, Christoph, 73760 Esslingen (DE); Datz, Wolfgang, 72076 Tübingen (DE); Kappes, Konstantin, 70188 Stuttgart (DE); Wolf, Tobias, 73257 Köngen (DE); Weinmann, Philipp, 73730 Esslingen (DE)
(74) Vertreter: Ruttensperger Lachnit Trossin Gomoll

(56) Entgegenhaltungen:
- EP-A1- 3 141 719
- EP-B1- 3 141 719
- WO-A1-2017/178094

## Beschreibung

Die vorliegende Erfindung betrifft eine Mischbaugruppe für eine Abgasbehandlungseinheit für eine Abgasanlage einer Brennkraftmaschine zum Mischen von von der Brennkraftmaschine abgegebenem Abgas mit Reaktionsmittel.

Aus der DE 10 2017 124 276 A1 ist eine Mischbaugruppe für eine Abgasanlage einer Brennkraftmaschine gemäß dem Oberbegriff des Anspruchs 1 bekannt, bei welcher der von einer Brennkraftmaschine abgegebene Abgasstrom in einer Mischstrecke aufgeteilt ist in einen einen Kern-Strömungskanal durchströmenden ersten Abgas-Teilstrom und einen einen Mantel-Strömungskanal durchströmenden zweiten Abgas-Teilstrom. Der Mantel-Strömungskanal ist nach radial außen durch eine in Richtung einer Mischstrecken-Längsachse langgestreckte Außenwandung begrenzt und ist nach radial innen durch eine Innenwandung von dem Kern-Strömungskanal getrennt. Stromaufwärts bezüglich eines stromaufwärtigen Endbereichs der Mischstrecke bzw. einer Einströmöffnung des Kern-Strömungskanal ist eine Reaktionsmittelabgabeanordnung, im Allgemeinen auch als Injektor bezeichnet, vorgesehen. Diese gibt flüssiges Reaktionsmittel in Form eines Sprühkegels derart ab, dass zumindest der größte Teil des Reaktionsmittels in den Kern-Strömungskanal eintritt.

Um die Durchmischung von Abgas und Reaktionsmittel zu unterstützen, ist bei dieser bekannten Mischbaugruppe ferner der Innenwandung eine elektrisch erregbare Heizeinrichtung zugeordnet. Durch die elektrisch erregbare Heizeinrichtung wird die Innenwandung erwärmt, so dass das auf diese als Sprühnebel bzw. in Tröpfchenform auftreffende Reaktionsmittel verdampft und der in den ersten Abgas-Teilstrom abgegebene Reaktionsmitteldampf sich verstärkt mit dem Abgas mischt.

Eine Mischbaugruppe gemäß dem Oberbegriff des Anspruchs 1 ist aus der WO 2017/178094 A1 bekannt. Bei der aus dieser Druckschrift bekannten Mischbaugruppe strömt das in den Mischer durch die Abgas-Eintrittsöffnungen hindurch eingetretene Abgas zusammen mit dem in den Mischer eingegebenen Reaktionsmittel in den Kern-Strömungskanal und den Mantel-Strömungskanal.

Es ist die Aufgabe der vorliegenden Erfindung, eine Mischbaugruppe für eine Abgasbehandlungseinheit für eine Abgasanlage einer Brennkraftmaschine vorzusehen, mit welcher bei baulich einfacher Ausgestaltung eine verbesserte Vermischung von Abgas und Reaktionsmittel erreicht wird.

Erfindungsgemäß wird diese Aufgabe gelöst durch eine Mischbaugruppe für eine Abgasbehandlungseinheit für eine Abgasanlage einer Brennkraftmaschine zum Mischen von von der Brennkraftmaschine abgegebenem Abgas mit Reaktionsmittel gemäß Anspruch 1, umfassend eine Reaktionsmittelabgabeanordnung und in einer Abgasströmungsrichtung stromabwärts bezüglich der Reaktionsmittelabgabeanordnung eine Mischstrecke zum Mischen von Abgas mit von der Reaktionsmitteleingabeanordnung in das Abgas abgegebenem Reaktionsmittel, wobei die Mischstrecke einen in Richtung einer Mischstrecken-Längsachse sich erstreckenden, von einem ersten Abgas-Teilstrom durchströmbaren Kern-Strömungskanal und einen den Kern-Strömungskanal umgebenden und von diesem durch eine Innenwandung getrennten und von einem zweiten Abgas-Teilstrom durchströmbaren Mantel-Strömungskanal umfasst, wobei die Reaktionsmittelabgabeanordnung zur Abgabe von Reaktionsmittel im Wesentlichen in den Kern-Strömungskanal oder/und den ersten Abgas-Teilstrom angeordnet ist.

Diese Mischbaugruppe zeichnet sich dadurch aus, dass an einem stromaufwärtigen Endbereich der Mischstrecke ein Mischer vorgesehen ist.

Durch den am Eingangsbereich der Mischstrecke vorgesehenen Mischer wird bereits beim Eintritt von Abgas und Reaktionsmittel in den Kern-Strömungskanal durch die vermittels des Mischers erzeugte Verwirbelung eine starke Durchmischung von Abgas und Reaktionsmittel und auch eine längere Verweilzeit in der Mischstrecke herbeigeführt. Unterstützt durch den im Mantel-Strömungskanal strömenden zweiten Abgas-Teilstrom und die durch diesen herbeigeführte Erwärmung der Innenwandung wird in der Mischstrecke eine effiziente Mischung von Abgas und Reaktionsmittel erreicht.

Um im Bereich des Mischers eine Wechselwirkung zwischen dem von einer Brennkraftmaschine ausgestoßenen Abgas und dem vermittels der Reaktionsmittelabgabeanordnung in den Abgasstrom eingespritzten Reaktionsmittel herbeiführen zu können, umfasst der Mischer eine die Mischstrecken-Längsachse umgebende und ein Mischervolumen umgrenzende Mischer-Umfangswandung, wobei in der Mischer-Umfangswandung eine Mehrzahl von in Umfangsrichtung aufeinander folgenden Abgas-Eintrittsöffnungen vorgesehen ist.

Die Mischwirkung des Mischers wird dadurch verstärkt, dass die Mischer-Umfangswandung in Richtung auf den stromaufwärtigen Endbereich der Mischstrecke zu sich radial erweiternd ausgebildet ist.

Um dafür zu sorgen, dass im Wesentlichen das gesamte von der Reaktionsmittelabgabeanordnung abgegebene Reaktionsmittel in den Kern-Strömungskanal eintritt, ist ein stromabwärtiger Endbereich der Mischer-Umfangswandung im stromaufwärtigen Endbereich der Mischstrecke in den Kern-Strömungskanal eingreifend positioniert.

Zum Unterstützen der effizienten Durchmischung von Abgas und Reaktionsmittel wird weiter vorgeschlagen, dass eine Erstreckungslänge des Kern-Strömungskanals oder/und des Mantel-Strömungskanals in Richtung der Mischstrecken-Längsachse größer ist, als eine Querschnittsabmessung, vorzugsweise Durchmesser, des Kern-Strömungskanals.

Für eine gezielte Eingabe des Reaktionsmittels in den Kern-Strömungskanal kann weiter vorgesehen sein, dass die Reaktionsmittelabgabeanordnung oder/und der Mischer an einer in Richtung der Mischstrecken-Längsachse in Abstand zu einer Einströmöffnung des Kern-Strömungskanals dieser gegenüberliegenden Gehäusewandung getragen ist.

Bei einer besonders bevorzugten Ausgestaltung kann in Zuordnung zu wenigstens einer, vorzugsweise jeder Abgas-Eintrittsöffnung ein Drallstrom-Erzeugungselement vorgesehen sein. Somit wird im Bereich des Mischers bzw. beim Eintritt in die Mischstrecke eine Drallströmung erzeugt, welche einerseits die verlängerte Verweildauer des Gemisches aus Abgas und Reaktionsmittel in der Mischstrecke unterstützt, und andererseits dafür sorgt, dass aufgrund der in der Drallströmung wirkenden Fliehkräfte verstärkt eine Wechselwirkung mit der Innenoberfläche der durch den zweiten Abgas-Teilstrom erwärmten Innenwandung entsteht.

Dabei kann beispielsweise vorgesehen sein, dass wenigstens ein, vorzugsweise jedes Drallstrom-Erzeugungselement einen von einem Randbereich der zugeordneten Abgas-Eintrittsöffnung nach radial innen in das Mischervolumen und in Umfangsrichtung sich erstreckenden Ablenkflügel umfasst, oder/und dass wenigstens ein, vorzugsweise jedes Drallstrom-Erzeugungselement einen von einem Randbereich der zugeordneten Abgas-Eintrittsöffnung nach radial außen von dem Mischervolumen weg und in Umfangsrichtung sich erstreckenden Ablenkflügel umfasst.

Um zu gewährleisten, dass eine ausreichende Abgasmenge als erster Abgas-Teilstrom in den Kern-Strömungskanal eintreten kann, wird vorgeschlagen, dass zwischen dem stromabwärtigen Endbereich der Mischer-Umfangswandung und der Innenwandung im stromaufwärtigen Endbereich der Mischstrecke ein ringartiger Durchströmkanal gebildet ist.

Ein stromaufwärtiger Endbereich der Mischer-Umfangswandung kann an der Gehäusewandung festgelegt sein.

Zur Anbringung der Reaktionsmittelabgabeanordnung kann an der Gehäusewandung ein Reaktionsmittelabgabeanordnung-Träger vorgesehen sein, wobei in dem Reaktionsmittelabgabeanordnung-Träger ein zu dem Mischervolumen offenes Reaktionsmittelaufnahmevolumen vorgesehen ist.

Die Erfindung betrifft ferner eine Abgasbehandlungseinheit für eine Abgasanlage einer Brennkraftmaschine, umfassend wenigstens eine erfindungsgemäß aufgebaute Mischbaugruppe.

Zur Zufuhr von Abgas zu der Mischstrecke kann in einem Abgaszuführgehäuse ein Abgaszuführvolumen zum Zuführen von Abgas zu dem Mischer im Wesentlichen von radial außen bezüglich der Mischstrecken-Längsachse vorgesehen.

Für eine einfach realisierbare bauliche Ausgestaltung kann die Gehäusewandung an dem Abgaszuführgehäuse vorgesehen sein.

Zur Abgabe des in der Mischstrecke erzeugten Gemisches aus Abgas und Reaktionsmittel kann in einem Abgasabführgehäuse ein Abgasabführvolumen zum Abführen von mit Reaktionsmittel vermischtem Abgas von einem stromabwärtigen Endbereich der Mischstrecke zu wenigstens einer SCR-Katalysatoranordnung vorgesehen sein.

Die Mischstrecke kann eine den Mantel-Strömungskanal nach radial außen begrenzende Außenwandung umfassen. Für einen einfach zu realisierenden und stabilen Aufbau kann diese Außenwandung im stromaufwärtigen Endbereich der Mischstrecke an das Abgaszuführgehäuse angebunden sein oder/und im stromabwärtigen Endbereich der Mischstrecke an das Abgasabführgehäuse angebunden sein.

Weiter kann zur Unterstützung der Aufteilung des Abgasstroms in den ersten Abgas-Teilstrom und den zweiten Abgas-Teilstrom im stromaufwärtigen Endbereich der Mischstrecke die Innenwandung sich in Richtung stromaufwärts über die Außenwandung hinaus in das im Abgaszuführgehäuse gebildete Abgaszuführvolumen hinein erstrecken. Im stromabwärtigen Endbereich der Mischstrecke kann die Innenwandung in Abgasströmungsrichtung vor der Außenwandung enden.

Die vorliegende Erfindung wird nachfolgend mit Bezug auf die beiliegenden Figuren detailliert beschrieben. Es zeigt:
- Fig. 1: eine Längsschnittansicht einer Abgasbehandlungseinheit für eine Abgasanlage einer Brennkraftmaschine, welche den zu einer Mischstrecke führenden Strömungsbereich zusammen mit der Mischstrecke darstellt,
- Fig. 2: eine Längsschnittdarstellung der Abgasbehandlungseinheit der Fig. 1, welche den von der Mischstrecke weg führenden Strömungsbereich zusammen mit der Mischstrecke darstellt.

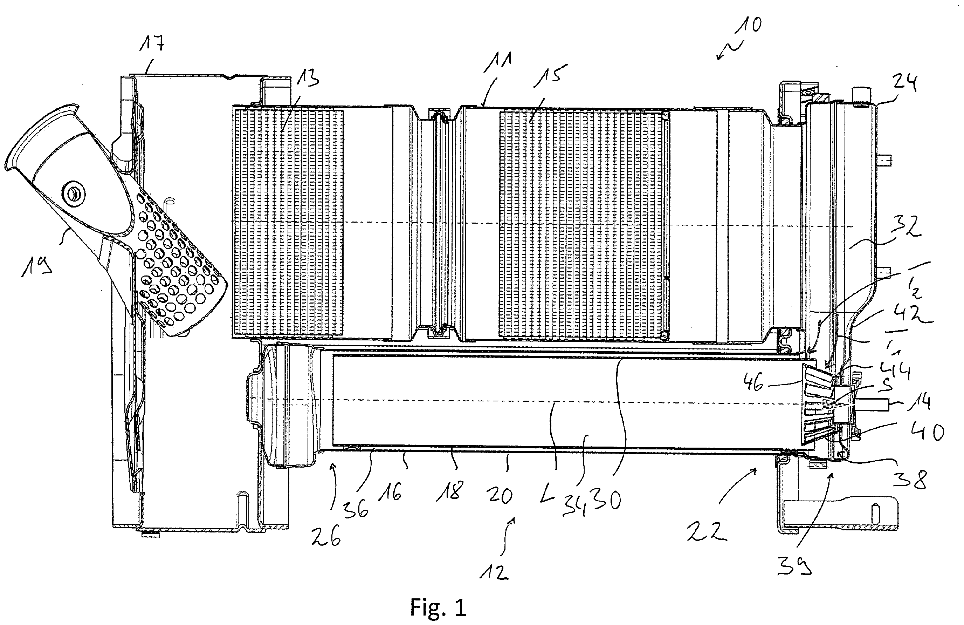

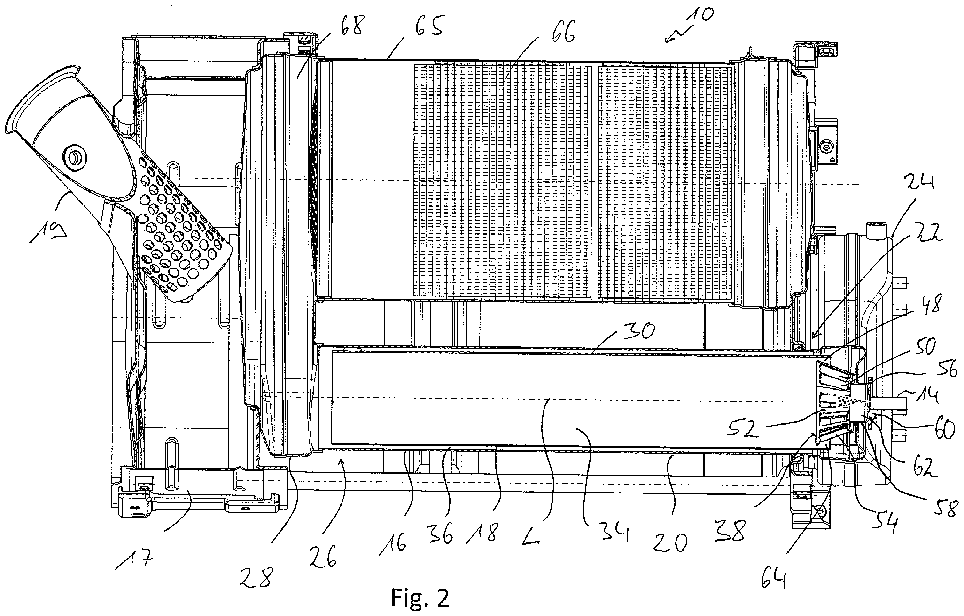

In Fig. 1 ist eine Abgasbehandlungseinheit für eine Abgasanlage einer Brennkraftmaschine, beispielsweise in einem Nutzkraftfahrzeug, allgemein mit 10 bezeichnet. Die Abgasbehandlungseinheit 10 umfasst als wesentlichen Systembereich eine nachfolgend detailliert erläuterte Mischstrecke 12, in welcher das von einer Brennkraftmaschine ausgestoßene Abgas mit dem von einer in Fig. 2 prinzipartig dargestellten Reaktionsmittelabgabeanordnung 14 abgegebenen Reaktionsmittel, beispielsweise einer Harnstoff/Wasser-Lösung, vermischt wird. In einem stromaufwärts bezüglich der Mischstrecke liegenden Bereich der Abgasbehandlungseinheit 10 sind in einem rohrartigen Gehäusebereich 11 in Strömungsrichtung aufeinanderfolgend ein Diesel-Oxidationskatalysator 13 und ein Partikelfilter 15 angeordnet. Stromaufwärts bezüglich des Gehäusebereichs 11 ist ein Einlassgehäuse 17 vorgesehen, in welches das von einer Brennkraftmaschine ausgestoßene Abgas über einen Abgaseinlass 19 eintritt.

Die Mischstrecke 12 umfasst als wesentliche Systembereiche zwei bezüglich einer Mischstrecken-Längsachse L beispielsweise zueinander im Wesentlichen koaxial angeordnete Rohre 16, 18. Das Rohr 16 stellt eine Außenwandung 20 bereit, mit welcher die Mischstrecke 12 in einem stromaufwärtigen Endbereich 22 derselben an ein allgemein mit 24 bezeichnetes und an den rohrartigen Gehäusebereich 11 anschließendes Abgaszuführgehäuse angebunden ist und in einem stromabwärtigen Endbereich 26 der Mischstrecke 12 an ein allgemein mit 28 bezeichnetes Abgasabführgehäuse angebunden ist.

Das Rohr 18 stellt eine Innenwandung 30 bereit, welche im stromaufwärtigen Endbereich 22 der Mischstrecke 12 sich in Richtung stromaufwärts über das die Außenwandung 20 bereitstellende Rohr 16 hinaus in ein im Abgaszuführgehäuse 24 gebildetes Abgaszuführvolumen 32 hinein erstreckt. Im stromabwärtigen Endbereich 26 der Mischstrecke 12 endet das die Innenwandung 30 bereitstellende Rohr 18 in Strömungsrichtung bereits vor dem die Außenwandung 20 bereitstellenden Rohr 16, so dass das Rohr 16 bzw. die Außenwandung 26 sich in der Abgasströmungsrichtung über das die Innenwandung 30 bereitstellende Rohr 16 hinaus erstreckt.

Das von der Innenwandung 30 umgrenzte Volumen stellt in der Mischstrecke 12 einen Kern-Strömungskanal 34 bereit, und das zwischen der Innenwandung 30 und der Außenwandung 20 gebildete ringartige Volumen stellt einen zum Kern-Strömungskanal 34 beispielsweise koaxialen Mantel-Strömungskanal 36 bereit. Ein Teil des über das Abgaszuführvolumen 32 im Abgaszuführgehäuse 24 zugeführten Abgasstroms tritt als erster Abgas-Teilstrom T₁ in den Kern-Strömungskanal 34 ein. Der verbleibende Teil des über das Abgaszuführvolumen 32 zugeführten Abgasstroms tritt im stromaufwärtigen Endbereich 22 der Mischstrecke 12 in den Mantel-Strömungskanal 36 ein. Dies hat zur Folge, dass durch den zweiten Abgas-Teilstrom T₂ einerseits der erste Abgas-Teilstrom T₁ nach radial außen thermisch isoliert ist und andererseits die Innenwandung 30 Wärme von dem im Mantel-Strömungskanal 36 strömenden zweiten Abgas-Teilstrom T₂ aufnimmt und somit erwärmt wird.

Im stromaufwärtigen Endbereich 22 der Mischstrecke 12 ist ein allgemein mit 38 bezeichneter Mischer vorgesehen. Der Mischer 38 bildet zusammen mit der Mischstrecke 12 die wesentlichen Bestandteile einer allgemein mit 39 bezeichneten Mischbaugruppe und ist mit einer Mischer-Umfangswandung 40 aufgebaut, welche in einem stromaufwärtigen Endbereich beispielsweise dadurch an einer Gehäusewandung 42 des Abgaszuführgehäuses 24 festgelegt ist, dass die Mischer-Umfangswandung 40 nach radial außen umgebogen und an der Innenseite der Gehäusewandung 42 beispielsweise durch Verschweißung festgelegt ist. Zwischen diesem stromaufwärtigen Endbereich 44 der Mischer-Umfangswandung 40 und einem stromabwärtigen Endbereich 46 der Mischer-Umfangswandung 40 ist diese sich beispielsweise konisch bezüglich der Mischstrecken-Längsachse L erweiternd ausgebildet. Zwischen dem stromabwärtigen Endbereich 46 der Mischer-Umfangswandung 40 und der Innenwandung 30 im stromaufwärtigen Endbereich 22 der Mischstrecke 12 ist ein ringartiger Durchströmkanal 48 gebildet, so dass ein Teil des ersten Abgas-Teilstroms T₁ durch diesen ringartigen Durchströmkanal 48 hindurch in den Kern-Strömungskanal 34 eintritt.

Der verbleibende bzw. der größere Teil des ersten Abgas-Teilstroms T₁ tritt über eine Mehrzahl von in Umfangsrichtung aufeinander folgenden Abgas-Eintrittsöffnungen 50 in der Mischer-Umfangswandung 40 in ein von dieser umgebenes Mischervolumen 52 ein. In Zuordnung zu jeder Abgas-Eintrittsöffnung 50 ist ein Drallstrom-Erzeugungselement 54 in Form eines von der Mischer-Umfangswandung 40 nach innen, also in das Mischervolumen 52 hervorstehenden und in Umfangsrichtung sich erstreckenden Ablenkflügels vorgesehen. Da alle Drallstrom-Erzeugungselemente 54 sich vorzugsweise in der gleichen Umfangsrichtung und nach radial innen erstrecken, wird beim Eintritt von Abgas in das Mischervolumen 52 von radial außen nach radial innen eine Drallströmung erzeugt, welche einerseits dafür sorgt, dass beim Weiterströmen in den Kern-Strömungskanal 34 aufgrund der größeren Strömungsstrecke eine längere Verweilzeit des ersten Abgas-Teilstroms T₁ im Kern-Strömungskanal 34 erzwungen wird, dass andererseits aufgrund der mit der Drallströmung entstehenden Fliehkräfte eine verstärkte Wechselwirkung mit der Innenoberfläche der Innenwandung 30 und somit eine verstärkte thermische Wechselwirkung des Abgases mit der Innenwandung 30 erzwungen wird.

Es ist darauf hinzuweisen, dass die oder ein Teil der Drallstrom-Erzeugungselemente 54 gleichermaßen auch nach radial außen, also in Richtung von dem Mischvolumen 52 weg und in Umfangsrichtung sich erstreckend ausgebildet sein könnten, um eine derartige Drallströmung zu erzeugen. Auch könnte ein Teil der Drallstrom-Erzeugungselemente 54 nach innen und ein Teil nach außen sich erstreckend ausgebildet sein. Weiter ist darauf hinzuweisen, dass in dem als Blechumformteil ausgebildetem Mischer 38 die flügelartigen Drallstrom-Erzeugungselemente dadurch gebildet werden können, dass in die Mischer-Umfangswandung 40 U-förmige Schlitze eingebracht werden, und dass zum Erzeugen der Abgas-Eintrittsöffnungen 50 die so gebildeten Laschen als Ablenkflügel dann nach innen oder außen umgebogen werden und sich somit ausgehend von einem Randbereich einer jeweils zugeordneten Abgas-Eintrittsöffnung 50 erstrecken.

An der Gehäusewandung 42 ist ferner ein beispielsweise topfartig ausgebildeter Reaktionsmittelabgabeanordnung-Träger 56 mit einer Umfangswandung 58 desselben beispielsweise durch Verschweißung festgelegt. An einer Bodenwandung 60 des Reaktionsmittelabgabeanordnung-Trägers 56 ist die ReaktionsmittelAbgabeanordnung 14 derart getragen, dass diese Reaktionsmittel in Richtung zu einem in dem Reaktionsmittelabgabeanordnung-Träger 56 gebildeten Reaktionsmittelaufnahmevolumen 62 abgibt. Das Reaktionsmittelaufnahmevolumen 62 ist zum Mischervolumen 52 offen, so dass das von der Reaktionsmittelabgabeanordnung 14 in Form eines Sprühkegels S bzw. in Tröpfchenform abgegebene Reaktionsmittel durch das Reaktionsmittelaufnahmevolumen 62 hindurch in das Mischervolumen 52 abgegeben wird und im Mischervolumen 52 dann in Kontakt mit dem durch die Abgas-Eintrittsöffnungen 50 hindurch in dieses eintretenden Abgas kommt.

Aufgrund der im Mischervolumen 52 erzeugten Drallströmung bzw. der damit auch einhergehenden Verwirbelung wird bereits im Mischervolumen 52 eine Vermischung von Abgas und Reaktionsmittel auftreten. Diese Vermischung wird dann in der Mischstrecke 12 beim Strömen der Drallströmung in Richtung zum stromabwärtigen Endbereich 26 der Mischstrecke 12 verstärkt, wobei aufgrund der thermischen Wechselwirkung des in Form eines Sprühkegels eingegebenen Reaktionsmittels mit der Innenwandung 30 die Verdampfung des zunächst noch flüssigen Reaktionsmittels und damit auch eine verbesserte Vermischung mit dem Abgas unterstützt werden. Eine effiziente Durchmischung von Abgas und Reaktionsmittel wird weiter dadurch unterstützt, dass der Mischer 38 mit seiner Mischer-Umfangswandung 40 im stromabwärtigen Endbereich 46 derselben durch eine Einströmöffnung 64 des Kern-Strömungskanals 34 hindurch in diesen bzw. in die Innenwandung 30 eingeführt ist, so dass die Mischer-Umfangswandung 40 sich in Richtung der Mischstrecken-Längsachse L mit der Innenwandung 30 axial überlappt. Auch dadurch ist gewährleistet, dass das gesamte von der Reaktionsmittelabgabeanordnung 14 abgegebene Reaktionsmittel in den Kern-Strömungskanal gelangt und ein Eintritt von Reaktionsmittel in den Mantel-Strömungskanal 36 weitestgehend unterbunden ist. Weiter trägt zu einer sehr guten Durchmischung von Abgas und Reaktionsmittel bei, dass die Mischstrecke 16 eine vergleichsweise große axiale Länge aufweist, die insbesondere größer ist, als die Querschnittsabmessung, also beispielsweise der Durchmesser, des Kern-Strömungskanals.

Am stromabwärtigen Endbereich 26 werden der zweite Abgas-Teilstrom T₂ und der mit Reaktionsmittel durchsetzte erste Abgas Teilstrom T₁ wieder zusammengeführt. Beim Eintritt in das Abgasabführgehäuse 28 wird der wieder vereinigte Abgasstrom in einem Abgasabführvolumen 68 dann bezüglich der Mischstrecken-Längsachse L radial bzw. näherungsweise um 90° umgelenkt, bevor, nach einer weiteren Umlenkung um näherungsweise 90°, der Abgasstrom in Richtung auf eine in einem an das Abgasabführungsgehäuse 28 anschließenden, rohrartigen Gehäusebereich 65 angeordneten SCR-Katalysatoranordnung 66 zu strömt, so dass dort die selektive katalytische Reduktion zur Verminderung des Stickoxidanteils im Abgas erfolgen kann.

Es ist darauf hinzuweisen, dass die in den Fig. 1 bis 3 dargestellte Abgasbehandlungseinheit in verschiedensten Aspekten variiert werden kann. So können beispielsweise mehrere Mischstrecken mit diesen jeweils zugeordneten Mischern und diesen jeweils zugeordneten Reaktionsmittelabgabeanordnungen zueinander parallel vorgesehen bzw. mit dem Abgaszuführgehäuse verbunden sein. An das Abgasabführgehäuse anschließend können mehrere zueinander parallel wirkende und jeweils in separaten, rohrartigen Gehäusen untergebrachte SCR-Katalysatoranordnungen vorgesehen sein.

## Patentansprüche

1. Mischbaugruppe für eine Abgasbehandlungseinheit für eine Abgasanlage einer Brennkraftmaschine zum Mischen von von der Brennkraftmaschine abgegebenem Abgas mit Reaktionsmittel, umfassend eine Reaktionsmittelabgabeanordnung (14) und in einer Abgasströmungsrichtung stromabwärts bezüglich der Reaktionsmittelabgabeanordnung (14) eine Mischstrecke (12) zum Mischen von Abgas mit von der Reaktionsmitteleingabeanordnung (14) in das Abgas abgegebenem Reaktionsmittel, wobei die Mischstrecke (12) einen in Richtung einer Mischstrecken-Längsachse (L) sich erstreckenden, von einem ersten Abgas-Teilstrom (T₁) durchströmbaren Kern-Strömungskanal (34) und einen den Kern-Strömungskanal (34) umgebenden und von diesem durch eine Innenwandung (30) getrennten und von einem zweiten Abgas-Teilstrom (T₂) durchströmbaren Mantel-Strömungskanal (36) umfasst, wobei die Reaktionsmittelabgabeanordnung (14) zur Abgabe von Reaktionsmittel im Wesentlichen in den Kern-Strömungskanal (34) oder/und den ersten Abgas-Teilstrom (T₁) angeordnet ist, wobei an einem stromaufwärtigen Endbereich (22) der Mischstrecke (12) ein Mischer (38) vorgesehen ist, wobei der Mischer (38) eine die Mischstrecken-Längsachse (L) umgebende und ein Mischervolumen (52) umgrenzende Mischer-Umfangswandung (40) umfasst, wobei in der Mischer-Umfangswandung (40) eine Mehrzahl von in Umfangsrichtung aufeinander folgenden Abgas-Eintrittsöffnungen (52) vorgesehen ist, wobei die Mischer-Umfangswandung (40) in Richtung auf den stromaufwärtigen Endbereich (22) der Mischstrecke (12) zu sich radial erweiternd ausgebildet ist, **dadurch gekennzeichnet, dass** ein stromabwärtiger Endbereich (46) der Mischer-Umfangswandung (40) im stromaufwärtigen Endbereich (22) der Mischstrecke (12) in den Kern-Strömungskanal (34) eingreifend positioniert ist.

2. Mischbaugruppe nach Anspruch 1, **dadurch gekennzeichnet, dass** eine Erstreckungslänge des Kern-Strömungskanals (34) oder/und des Mantel-Strömungskanals (36) in Richtung der Mischstrecken-Längsachse (L) größer ist, als eine Querschnittsabmessung, vorzugsweise Durchmesser, des Kern-Strömungskanals (34).

3. Mischbaugruppe nach Anspruch 1 oder 2, **dadurch gekennzeichnet, dass** die Reaktionsmittelabgabeanordnung (14) oder/und der Mischer (38) an einer in Richtung der Mischstrecken-Längsachse (L) in Abstand zu einer Einströmöffnung (64) des Kern-Strömungskanals (34) dieser gegenüberliegenden Gehäusewandung (42) getragen ist.

4. Mischbaugruppe nach einem der vorangehenden Ansprüche, **dadurch gekennzeichnet, dass** in Zuordnung zu wenigstens einer, vorzugsweise jeder Abgas-Eintrittsöffnung (52) ein Drallstrom-Erzeugungselement (54) vorgesehen ist.

5. Mischbaugruppe nach Anspruch 4, **dadurch gekennzeichnet, dass** wenigstens ein, vorzugsweise jedes Drallstrom-Erzeugungselement (54) einen von einem Randbereich der zugeordneten Abgas-Eintrittsöffnung (52) nach radial innen in das Mischervolumen (52) und in Umfangsrichtung sich erstreckenden Ablenkflügel umfasst, oder/und dass wenigstens ein, vorzugsweise jedes Drallstrom-Erzeugungselement einen von einem Randbereich der zugeordneten Abgas-Eintrittsöffnung nach radial außen von dem Mischervolumen weg und in Umfangsrichtung sich erstreckenden Ablenkflügel umfasst.

6. Mischbaugruppe nach einem der vorangehenden Ansprüche, **dadurch gekennzeichnet, dass** zwischen dem stromabwärtigen Endbereich (46) der Mischer-Umfangswandung (40) und der Innenwandung (30) im stromaufwärtigen Endbereich (22) der Mischstrecke (12) ein ringartiger Durchströmkanal (48) gebildet ist.

7. Mischbaugruppe nach Anspruch 3 und einem der Ansprüche 4-6, **dadurch gekennzeichnet, dass** ein stromaufwärtiger Endbereich (44) der Mischer-Umfangswandung (40) an der Gehäusewandung (42) festgelegt ist.

8. Mischbaugruppe nach Anspruch 3 und einem der Ansprüche 4-7, **dadurch gekennzeichnet, dass** an der Gehäusewandung (42) ein Reaktionsmittelabgabeanordnung-Träger (56) vorgesehen ist, wobei in dem Reaktionsmittelabgabeanordnung-Träger (56) ein zu dem Mischervolumen (52) offenes Reaktionsmittelaufnahmevolumen (62) vorgesehen ist.

9. Abgasbehandlungseinheit für eine Abgasanlage einer Brennkraftmaschine, umfassend wenigstens eine Mischbaugruppe (39) nach einem der vorangehenden Ansprüche.

10. Abgasbehandlungseinheit nach Anspruch 9, **dadurch gekennzeichnet, dass** in einem Abgaszuführgehäuse (24) ein Abgaszuführvolumen (32) zum Zuführen von Abgas zu dem Mischer (38) im Wesentlichen von radial außen bezüglich der Mischstrecken-Längsachse (L) vorgesehen ist.

11. Abgasbehandlungseinheit nach Anspruch 10, sofern auf Anspruch 3 rückbezogen, dass die Gehäusewandung (42) an dem Abgaszuführgehäuse (24) vorgesehen ist.

12. Abgasbehandlungseinheit nach einem der Ansprüche 9-11, **dadurch gekennzeichnet, dass** in einem Abgasabführgehäuse (28) ein Abgasabführvolumen (68) zum Abführen von mit Reaktionsmittel vermischtem Abgas von einem stromabwärtigen Endbereich (26) der Mischstrecke (12) zu wenigstens einer SCR-Katalysatoranordnung (66) vorgesehen ist.

13. Abgasbehandlungseinheit nach Anspruch 12 und Anspruch 10, **dadurch gekennzeichnet, dass** die Mischstrecke (12) eine den Mantel-Strömungskanal (36) nach radial außen begrenzende Außenwandung (20) umfasst, und dass die Außenwandung (20) im stromaufwärtigen Endbereich (22) der Mischstrecke (12) an das Abgaszuführgehäuse (24) angebunden ist oder/und im stromabwärtigen Endbereich (26) der Mischstrecke (12) an das Abgasabführgehäuse (28) angebunden ist.

14. Abgasbehandlungseinheit nach Anspruch 13, **dadurch gekennzeichnet, dass** im stromaufwärtigen Endbereich (22) der Mischstrecke (12) die Innenwandung (30) sich in Richtung stromaufwärts über die Außenwandung (20) hinaus in das im Abgaszuführgehäuse (24) gebildete Abgaszuführvolumen (32) hinein erstreckt, oder/und dass im stromabwärtigen Endbereich (26) der Mischstrecke (12) die Innenwandung (30) in Abgasströmungsrichtung vor der Außenwandung (20) endet.

## Claims

1. Mixer assembly unit for an exhaust gas treatment unit for an exhaust system of an internal combustion engine for mixing exhaust gas discharged by the internal combustion engine with reactant, comprising a reactant release device (14) and, located downstream in an exhaust gas flow direction in relation to the reactant release device (14), a mixing section (12) for mixing exhaust gas with reactant released by the reactant release device (14) into the exhaust gas, wherein the mixing section (12) comprises a core flow duct (34), which extends in the direction of a mixing section longitudinal axis (L) and through which a first exhaust gas partial stream (T₁) can flow, and a jacket flow duct (36), which encloses the core flow duct (34) and is separated from this by an inner wall (30) and through which a second exhaust gas partial stream (T₂) can flow, wherein the reactant release device (14) is arranged for releasing reactant essentially into the core flow duct (34) or/and into the first exhaust gas partial stream (T₁), wherein a mixer (38) is provided at an upstream end area (22) of the mixing section (12), wherein the mixer (38) comprises a mixer circumferential wall (40), which encloses the mixing section longitudinal axis (L) and encloses a mixer volume (52), wherein a plurality of exhaust gas inlet openings (52) following one another in the circumferential direction are provided in the mixer circumferential wall (40), wherein the mixer circumferential wall (40) is configured such that it expands radially in the direction of the upstream end area (22) of the mixing section (12),
**characterized in that** a downstream end area (46) of the mixer circumferential wall (40) is positioned such that it meshes with the core flow duct (34) in the upstream end area (22) of the mixing section (12).

2. Mixer assembly unit in accordance with claim 1, **characterized in that** a length of extension of the core flow duct (34) or/and of the jacket flow duct (36) in the direction of the mixing section longitudinal axis (L) is greater than a cross-sectional dimension, preferably diameter, of the core flow duct (34).

3. Mixer assembly unit in accordance with claim 1 or 2, **characterized in that** the reactant release device (14) or/and the mixer (38) are carried at a housing wall (42), which extends in the direction of the mixing section longitudinal axils (L) at a spaced location from an inflow opening (64) of the core flow duct (34) and is located opposite this inflow opening.

4. Mixer assembly unit in accordance with one of the preceding claims, **characterized in that** a swirling flow generation element (54) is provided in association with at least one and preferably each exhaust gas inlet opening (52).

5. Mixer assembly unit in accordance with claim 4, **characterized in that** at least one and preferably each swirling flow generation element (54) comprises a deflecting wing, which extends from an edge area of the associated exhaust gas inlet opening (52) radially inwards into the mixer volume (52) and extends in the circumferential direction, or/and that at least one and preferably each swirling flow generation element comprises a deflecting wing extending radially outwards away from the mixer volume from an edge area of the associated exhaust gas inlet opening and in the circumferential direction.

6. Mixer assembly unit in accordance with one of the preceding claims, **characterized in that** a ring-like flow duct (48) is formed in the upstream end area (22) of the mixing section (12) between the downstream end area (46) of the mixer circumferential wall (40) and the inner wall (30).

7. Mixer assembly unit in accordance with claim 3 and one of the claims 4-6, **characterized in that** an upstream end area (44) of the mixer circumferential wall (40) is fixed at the housing wall (42).

8. Mixer assembly unit in accordance with claim 3 and one of the claims 4-7, **characterized in that** a reactant release device carrier (56) is provided at the housing wall (42), wherein a reactant receiving volume (62) open to the mixer volume (52) is provided in the reactant release device carrier (56).

9. Exhaust gas treatment unit for an exhaust system of an internal combustion engine, comprising at least one mixer assembly unit (39) in accordance with one of the preceding claims.

10. Exhaust gas treatment unit in accordance with claim 9, **characterized in that** an exhaust gas feed volume (32) for feeding exhaust gas to the mixer (38) essentially from radially outwards in relation to the mixing section longitudinal axis (L) is provided in an exhaust gas feed housing (24).

11. Exhaust gas treatment unit in accordance with claim 10, if referred back to claim 3, **characterized in that** the housing wall (42) is provided at the exhaust gas feed housing (24).

12. Exhaust gas treatment unit in accordance with one of the claims 9-11, **characterized in that** an exhaust gas removal volume (68) for removing exhaust gas mixed with reactant from a downstream end area (26) of the mixing section (12) to at least one SCR catalytic converter device (66) is provided in an exhaust gas removal housing (28).

13. Exhaust gas treatment unit in accordance with claim 12 and claim 10, **characterized in that** the mixing section (12) comprises an outer wall (20) defining the jacket flow duct (36) radially outwards, and that the outer wall (20) is connected to the exhaust gas feed housing (24) in the upstream end area (22) of the mixing section (12) or/and it is connected to the exhaust gas removal housing (28) in the downstream end area (26) of the mixing section (12).

14. Exhaust gas treatment unit in accordance with claim 13, **characterized in that** in the upstream end area (22) of the mixing section (12), the inner wall (30) extends beyond the outer wall (20) into the exhaust gas feed volume (32) formed in the exhaust gas feed housing (24), or/and that the inner wall (30) ends in front of the outer wall (20) in the exhaust gas flow direction in the downstream end area (26) of the mixing section (12).

## Revendications

1. Unité de mélange pour une unité de traitement des gaz d'échappement pour un système d'échappement d'un moteur à combustion interne pour mélanger les gaz d'échappement évacués par le moteur à combustion interne avec un réactif, comprenant un dispositif de libération de réactif (14) et, situé en aval dans une direction d'écoulement des gaz d'échappement par rapport au dispositif de libération de réactif (14), une section de mélange (12) pour mélanger les gaz d'échappement avec le réactif libéré par le dispositif de libération de réactif (14) dans les gaz d'échappement, dans lequel la section de mélange (12) comprend un conduit d'écoulement central (34), qui s'étend dans la direction d'un axe longitudinal de la section de mélange (L) et à travers lequel un premier écoulement partiel de gaz d'échappement (T₁) peut s'écouler, et un conduit d'écoulement d'enveloppe (36), qui entoure le conduit d'écoulement central (34) et est séparé de celui-ci par une paroi intérieure (30) et à travers lequel un deuxième écoulement partiel de gaz d'échappement (T₂) peut s'écouler, dans lequel le dispositif de libération de réactif (14) est agencé pour libérer un réactif essentiellement dans le conduit d'écoulement central (34) et/ou dans le premier écoulement partiel de gaz d'échappement (T₁), dans lequel un mélangeur (38) est prévu au niveau d'une zone d'extrémité amont (22) de la section de mélange (12), dans lequel le mélangeur (38) comprend une paroi circonférentielle du mélangeur (40), qui entoure l'axe longitudinal de la section de mélange (L) et entoure un volume de mélangeur (52), dans lequel une pluralité d'ouvertures d'entrée de gaz d'échappement (52) se succédant dans la direction circonférentielle sont prévues dans la paroi circonférentielle du mélangeur (40), dans lequel la paroi circonférentielle du mélangeur (40) est adaptée de telle sorte qu'elle s'élargit radialement en direction de la zone d'extrémité amont (22) de la section de mélange (12),
**caractérisé en ce qu'**une zone d'extrémité aval (46) de la paroi circonférentielle du mélangeur (40) est positionnée de telle sorte qu'elle s'engrène avec le conduit d'écoulement central (34) dans la zone d'extrémité amont (22) de la section de mélange (12).

2. Unité de mélange selon la revendication 1, **caractérisée en ce qu'**une longueur d'extension du conduit d'écoulement central (34) ou/et du conduit d'écoulement d'enveloppe (36) dans la direction de l'axe longitudinal de section de la mélange (L) est supérieure à une dimension de section transversale, de préférence un diamètre, du conduit d'écoulement central (34).

3. Unité de mélange selon la revendication 1 ou 2, **caractérisée en ce que** le dispositif de libération de réactif (14) et/ou le mélangeur (38) sont portés par une paroi de boîtier (42) qui s'étend dans la direction de l'axe longitudinal de la section de mélange (L), à distance d'une ouverture d'entrée (64) du conduit d'écoulement central (34) et en face de celle-ci.

4. Unité de mélange selon l'une des revendications précédentes, **caractérisée en ce qu'**un élément de génération d'écoulement tourbillonnaire (54) est prévu en association avec au moins une et de préférence chaque ouverture d'entrée de gaz d'échappement (52).

5. Unité de mélange selon la revendication 4, **caractérisée en ce qu'**au moins un et de préférence chaque élément de génération d'écoulement tourbillonnaire (54) comprend une aile de déviation, qui s'étend depuis une zone de bord de l'ouverture d'entrée de gaz d'échappement (52) associée radialement vers l'intérieur dans le volume de mélangeur (52) et s'étend dans la direction circonférentielle, ou/et **en ce qu'**au moins un et de préférence chaque élément de génération d'écoulement tourbillonnaire comprend une aile de déviation s'étendant radialement vers l'extérieur à l'écart du volume du mélangeur depuis une zone de bord de l'ouverture d'entrée de gaz d'échappement associée et dans la direction circonférentielle.

6. Unité de mélange selon l'une des revendications précédentes, **caractérisée en ce qu'**un conduit d'écoulement annulaire (48) est formé dans la zone d'extrémité amont (22) de la section de mélange (12) entre la zone d'extrémité aval (46) de la paroi circonférentielle du mélangeur (40) et la paroi intérieure (30).

7. Unité de mélange selon la revendication 3 et l'une des revendications 4-6, **caractérisée en ce qu'**une zone d'extrémité amont (44) de la paroi circonférentielle du mélangeur (40) est fixée à la paroi de boîtier (42).

8. Unité de mélange selon la revendication 3 et l'une des revendications 4-7, **caractérisée en ce qu'**un support de dispositif de libération de réactif (56) est prévu au niveau de la paroi de boîtier (42), dans lequel un volume de réception de réactif (62) ouvert sur le volume de mélangeur (52) est prévu dans le support de dispositif de libération de réactif (56).

9. Unité de traitement des gaz d'échappement pour un système d'échappement d'un moteur à combustion interne, comprenant au moins une unité de mélange (39) selon l'une des revendications précédentes.

10. Unité de traitement des gaz d'échappement selon la revendication 9, **caractérisée en ce qu'**un volume d'alimentation en gaz d'échappement (32) destiné à alimenter le mélangeur (38) en gaz d'échappement essentiellement de manière radiale vers l'extérieur par rapport à l'axe longitudinal de la section de mélange (L) est prévu dans un boîtier d'alimentation en gaz d'échappement (24).

11. Unité de traitement des gaz d'échappement selon la revendication 10, si elle se réfère à la revendication 3, **caractérisée en ce que** la paroi de boîtier (42) est prévue au niveau du boîtier d'alimentation en gaz d'échappement (24).

12. Unité de traitement des gaz d'échappement selon l'une des revendications 9-11, **caractérisée en ce qu'**un volume d'évacuation des gaz d'échappement (68) pour évacuer les gaz d'échappement mélangés à un réactif depuis une zone d'extrémité aval (26) de la section de mélange (12) vers au moins un dispositif de convertisseur catalytique SCR (66) est prévu dans un boîtier d'évacuation des gaz d'échappement (28).

13. Unité de traitement des gaz d'échappement selon la revendication 12 et la revendication 10, **caractérisée en ce que** la section de mélange (12) comprend une paroi extérieure (20) définissant le conduit d'écoulement d'enveloppe (36) radialement vers l'extérieur, et **en ce que** la paroi extérieure (20) est reliée au boîtier d'alimentation en gaz d'échappement (24) dans la zone d'extrémité amont (22) de la section de mélange (12) ou/et elle est reliée au boîtier d'évacuation des gaz d'échappement (28) dans la zone d'extrémité aval (26) de la section de mélange (12).

14. Unité de traitement des gaz d'échappement selon la revendication 13, **caractérisée en ce que** dans la zone d'extrémité amont (22) de la section de mélange (12), la paroi intérieure (30) s'étend au-delà de la paroi extérieure (20) dans le volume d'alimentation en gaz d'échappement (32) formé dans le boîtier d'alimentation en gaz d'échappement (24), ou/et **en ce que** la paroi intérieure (30) se termine devant la paroi extérieure (20) dans la direction d'écoulement des gaz d'échappement dans la zone d'extrémité aval (26) de la section de mélange (12).
